# EUROPEAN PATENT APPLICATION

(11) **EP 4 737 841 A1**
(43) Date of publication of application: **06.05.2026**
(21) Application number: 25211225.5
(22) Date of filing: 25.10.2025
(51) Int. Cl.: F28D 7/10, F28F 13/10

(54) **RESONANCE HEAT EXCHANGER**

(30) Priority: 30.10.2024 BG 11398824
(71) Applicant: Yamilev Ltd, 8238 Nessebar mun. (BG)
(72) Inventor: Yamileva, Rima, 8238 Burgas, Nessebar, Ravda, Makedonia 61, ent.1, 601 (BG)

(57) **Abstract**

The present invention relates to heat exchange devices and can be used in technological processes in energy, utilities, oil refining, petrochemical, chemical, nuclear, refrigeration, gas, cryogenic, and other industries. The resonant heat exchange apparatus comprising a Helmholtz resonator consisting of a chamber with an input for a pulsating gas flow and at least one pipe connected to the output of said chamber of the Helmholtz resonator, and said resonant heat exchange apparatus includes a device for forming a pulsating gas flow connected to the input of said chamber of the Helmholtz resonator, where the natural frequency of said Helmholtz resonator is greater than zero and the quality factor of the resonator is greater than one.

## Description

### Field of Technology

The present invention relates to heat exchangers and can be used in technological processes in energy, utilities, oil refining, petrochemical, chemical, nuclear, refrigeration, gas, cryogenic, and other industries.

### Background of the Art

Various methods for intensifying heat exchange are known and are classified into two categories:
1. **Active methods of intensification:** vibration of the surface, liquid mixing, etc.; influence on the flow by electric, magnetic, or acoustic fields, pressure pulsations, and others.
2. **Passive methods,** based on the impact on the flow by the shape of the heat exchange surface: use of intensifiers (helical, localized, and plate-type flow swirlers), various types of finning on the heat exchange surface, etc.

A known volumetric heat exchanger for self-excited pulsating extended heat exchange includes a housing (1), a separating plate (2), a section (3) for the inlet of the heating medium, a section (4) for the outlet pipe of the heating medium, a section (5) for the inlet of the refrigerant, a section (6) for the outlet of the refrigerant, a heat exchange tube (7), and a hose (8); a flow-limiting valve (10), and a self-oscillating device (12) and a pulsating hydraulic transmission device (13). The separating plate (2) is located within the housing (1), and an opening is formed in the separating plate (2), dividing the housing (1) into an upper chamber and a lower chamber. The upper and lower chambers communicate with each other through openings in the separating plate (2). The refrigerant outlet section (6) communicates with the upper chamber of the housing (1), and the refrigerant inlet section (5) communicates with the lower chamber of the housing (1). The heat exchange tube (7) passes through the opening in the separating plate (2); the inlet end of the heat exchange tube (7) is located within the housing and communicates with the heating medium inlet section (3) through a hose (8); the outlet end of the heat exchange tube (7) is also located within the housing and communicates with the heating medium outlet section (4) through another hose (8). The pulsating hydraulic transmission device (13) consists of an upper cover (13-1), a base (13-2), a diaphragm (13-3), a rigid rod structure (13-4), and a return spring (13-5). The base (13-2) is mounted on the housing (1), and the diaphragm (13-3) is positioned between the upper cover (13-1) and the base (13-2). The base (13-2) has an opening that communicates with the diaphragm (13-3). One end of the rigid rod structure (13-4) passes through the upper cover (13-1) and contacts the diaphragm (13-3), while the other end is attached to the outlet end of the heat exchange tube (7). The return spring (13-5) is additionally provided between the rigid rod structure (13-4) and the upper cover (13-1). The self-oscillating device (12) includes a front nozzle (a), an oscillation chamber (12-2), a rear nozzle (12-3), an output flange (12-4), and a side tube (12-5). The oscillation chamber (12-2) is positioned between the front nozzle (a) and the rear nozzle (12-3), with the rear nozzle (12-3) communicating with an opening. The base (13-2) through the output flange (12-4), and the side connecting pipe (12-5), with the front nozzle (a) equipped with a flow restrictor, and the valve pipeline (10) communicates with the section (4) for the outlet of the heat transfer medium (invention patent CN108645248, published 12.10.2018).

A known heat exchanger with pulsating gas supply includes a housing with inlet and outlet nozzles for heat transfer media, heat exchange tubes, and a gas flow interrupter in the form of a shaft with a blade wheel. The shaft is fitted with a sleeve that encloses it, allowing movement relative to its axis. The blade wheel is fixed on the mentioned sleeve, and two perforated disks are placed on the shaft with a gap between them before the heat exchange tubes. One of these disks is stationary relative to the walls of the housing, while the other is rotatable (invention patent RU2047080, published 27.10.1995).

Another known heat exchanger with pulsating gas supply includes an impulse tube (30) containing heat exchangers (16), (18), (22), (26). The heat exchanger also includes a reservoir (28) and is equipped with variable acoustic impedance connecting the impulse tube (30) and the reservoir (28). The variable acoustic impedance consists of two or more variable resistances, which may include variable inertia of the tube (32) and valves (13) that create elements with variable resistance. Pulsating gas flow is supplied from a compressor (14) or a thermoacoustic engine (invention patent WO1998000677A1, published 1998-01-08).

The common drawbacks of these known devices are complex design and insufficient heat transfer efficiency.

### Objective of the Invention

The objective of the claimed invention is to significantly improve heat exchange efficiency and simplify the design.

### Essence of the Invention

The technical result is achieved by a resonant heat exchange apparatus comprising a Helmholtz resonator consisting of a chamber with an input for a pulsating gas flow and at least one pipe connected to the output of said chamber of the Helmholtz resonator, and said resonant heat exchange apparatus includes a device for forming a pulsating gas flow connected to the input of said chamber of the Helmholtz resonator, where the natural frequency of said Helmholtz resonator is greater than zero and the quality factor of the resonator is greater than one.

### List of Drawings

The resonant heat exchanger is illustrated by the following drawings:
- **Figure 1** shows the amplification of the gas flow pulsation amplitude by the Helmholtz resonator.
- **Figure 2** depicts the resonant heat exchanger with a pulsating gas flow at the inlet of the Helmholtz resonator chamber.
- **Figure 3** shows the resonant heat exchanger with pulsation generation in the gas flow from a constant gas flow.

### Examples of Preferred Embodiments of the Invention

It is known that heat transfer per unit area of the wall is greater when the wall is exposed to a gas flow than without such exposure. If the wall is exposed to a pulsating flow, the heat transfer efficiency increases compared to exposure to a constant flow, as the gas mixing is intensified, and a larger volume of gas comes into contact with the wall. The higher the amplitude of the gas flow pulsations, the higher the heat transfer efficiency per unit area of the wall, due to further enhanced gas mixing and increased gas contact with the wall. The essence of this invention lies in increasing the heat transfer efficiency per unit area by amplifying the amplitude of gas flow pulsations. The Helmholtz resonator enables a significant increase in pulsation amplitude without energy expenditure. Such an increase in gas flow pulsation amplitude in the resonator tube results in a multiple increase in heat exchange between the pulsating gas flow and the wall of the Helmholtz resonator tube.

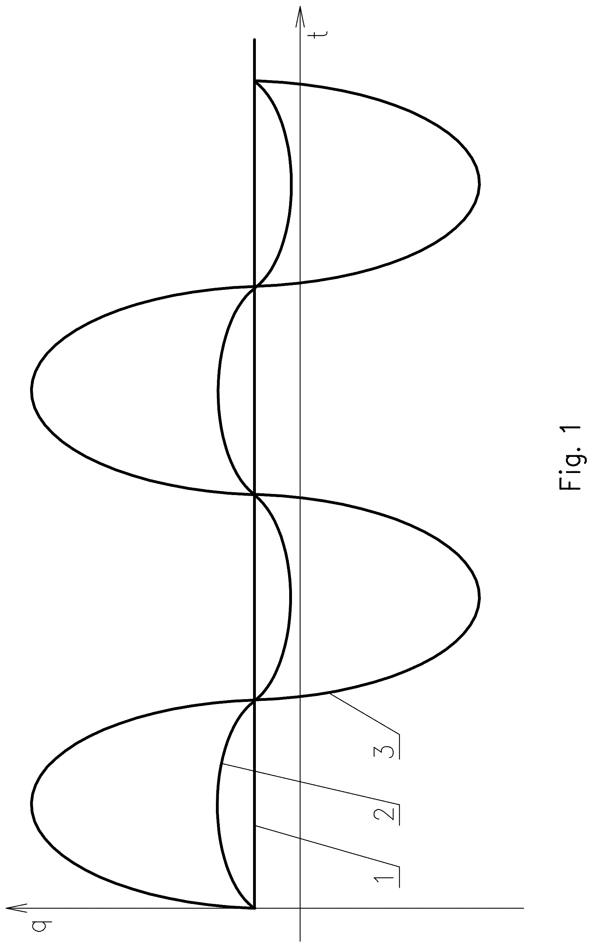

In **Figure 1****,** line 1 represents the constant gas flow in the heat exchanger tubes, and line 2 shows the amplitude of gas flow pulsations at the inlet of the Helmholtz resonator chamber. Line 3 illustrates the amplitude of gas flow pulsations in the Helmholtz resonator tube when the gas flow pulsation amplitude at the resonator chamber inlet is as shown by line 2. The amplitude of the resonant pulsations shown by line 3 will be greater than the non-resonant pulsation amplitude shown by line 2, in proportion to the quality factor of the Helmholtz resonator. By definition, the quality factor is the ratio of oscillation energy to the energy losses over one radian of angular oscillation frequency. Energy losses occur due to pressure leaks in the Helmholtz resonator chamber and friction of the flow against the walls of the resonator tube or tubes. Even a simple resonator design of a Helmholtz resonator, without the use of special materials and processing methods, can achieve a quality factor of up to 50.

The essence of this invention lies in the design of the heat exchanger as a Helmholtz resonator, consisting of a chamber and at least one tube. As shown in **Figure 1****,** the amplitude of gas flow pulsations in the tube or tubes of the Helmholtz resonator is higher than the amplitude of gas flow pulsations at the inlet of the resonator chamber. Therefore, the walls of the Helmholtz resonator tubes achieve significant heat transfer efficiency. Resonant gas flow pulsations with increased amplitude are present along the entire length of the Helmholtz resonator tubes. The amplitude of gas flow pulsations in the resonator tubes increases as the natural resonance frequency of the Helmholtz resonator approaches the pulsation frequency at the chamber inlet and as the resonator's quality factor increases.

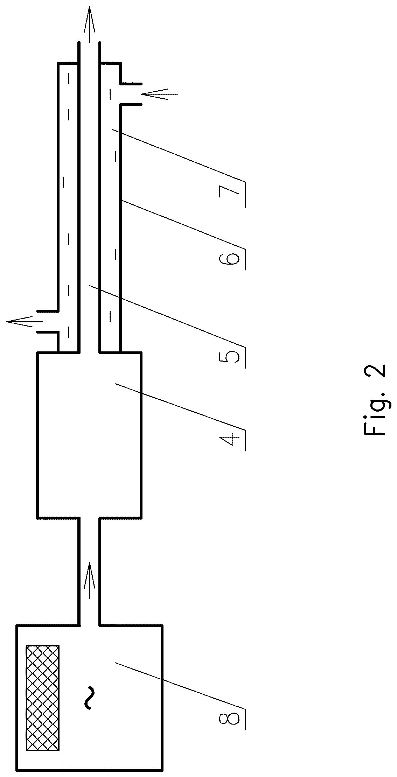

**Figure 2** shows an implementation of the resonant heat exchanger with pulsating gas flow at the inlet of the Helmholtz resonator chamber. The heat exchanger consists of a Helmholtz resonator, formed by a chamber (4) and at least one tube (5), which is placed within a vessel (6) containing a flowing heat transfer medium (7), which can be liquid or gaseous. The pulsating gas flow enters the Helmholtz resonator chamber (4) from a source (8). The source of the pulsating gas flow may be an internal combustion engine, a piston compressor, a pulsating combustion device, or similar equipment.

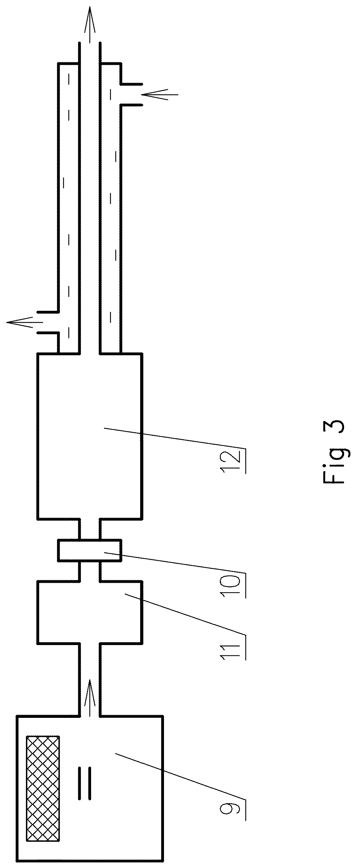

**Figure 3** shows an implementation of the resonant heat exchanger with a constant, rather than pulsating, gas flow supplied from source 9. In this case, a flow interrupter 10 is installed at the inlet of the Helmholtz resonator chamber 12, and a chamber 11 may be installed at the inlet of the flow interrupter 10 to match the constant gas flow from source 9 with the pulsating flow at the inlet of the Helmholtz resonator chamber 12. The source of the constant gas flow can be a fan, turbine, screw compressor, boiler with a forced-draft burner, or similar device.

The described implementations of the resonant heat exchanger can be applied in various systems across different technological processes, such as heating systems, air conditioning and cooling systems, cryogenic gas liquefaction systems, waste heat recovery systems, and so on.

If a constant, non-pulsating gas flow is required at the outlet of the resonant heat exchanger, a damping chamber (not shown in the figures) can be installed at the outlet of the resonant heat exchanger. Alternatively, to stabilize the gas flow at the outlet of the resonant heat exchanger, a stabilizing Helmholtz resonator (not shown in the figures) with a natural resonance frequency lower than the pulsation frequency of the gas flow in the resonant heat exchanger may be installed.

## Claims

1. A resonant heat exchange apparatus comprising a Helmholtz resonator consisting of a chamber with an input for a pulsating gas flow and at least one pipe connected to the output of said chamber of the Helmholtz resonator, and said resonant heat exchange apparatus includes a device for forming a pulsating gas flow connected to the input of said chamber of the Helmholtz resonator, where the natural frequency of said Helmholtz resonator is greater than zero and the quality factor of the resonator is greater than one.

2. The resonant heat exchanger according to claim 1, wherein the device for generating the pulsating gas flow is a mechanical gas flow interrupter.

3. The resonant heat exchanger according to claim 1, wherein the device for generating the pulsating gas flow is an internal combustion engine, a compressor with a pulsating gas flow, or a pulsating combustion device.

4. The resonant heat exchanger according to claim 2, wherein a chamber for matching the constant gas flow with the pulsating flow at the inlet of the Helmholtz resonator chamber is installed at the inlet of the mechanical gas flow interrupter.

5. The resonant heat exchanger according to claim 1, wherein at least one tube of the Helmholtz resonator is placed in a vessel with a flowing liquid or gaseous heat transfer medium.
